# EUROPEAN PATENT APPLICATION

(11) **EP 4 567 273 A1**
(43) Date of publication of application: **11.06.2025**
(21) Application number: 22953893.9
(22) Date of filing: 03.08.2022
(51) Int. Cl.: F03D 1/06, F01D 5/14

(54) **METHOD FOR OBTAINING AN IMPROVED SEGMENTED BLADE**

(71) Applicant: Nabrawind Technologies, S.L., 31002 Pamplona (ES)
(72) Inventor: SANZ PASCUAL, Eneko, 31002 Pamplona (ES); MONREAL LESMES, Javier, 31180 Zizur Mayor (ES); MAYOR MORENO, Luis Alberto, 28026 Madrid (ES); CALLEN ESCARTÍN, Francisco Javier, 22005 Huesca (ES)
(86) International application number: PCT/ES2022/070519
(87) International publication number: WO 2024/028521

(57) **Abstract**

The invention relates to a method for obtaining an improved segmented blade, wherein, for a blade 95 m long with the joint disposed 25-30 m form the blade tip:
a) the chord and overall thickness in the 20 m of the outboard module (3) are reduced by 75%;
b) the outboard module (3) is extended by 1 m;
c) joining elements (5) per cap are reduced from 10 to 8, and the blade mass from 800 kg to 640 kg, reducing the impact for the joint mass on the rest of the wind turbine; and
d) loads at the blade root are reduced by 11% without affecting wind turbine productivity.

The standard blade and the selender blade are manufactured in the same mould by adding detechable pieces at the end of the mould, depending on the required desingns.

## Description

### Field of invention

The present invention falls within the field of segmented wind turbine blades, more particularly, in the development of an agile and effective methodology for blade design that allows groups of segmented blades to be optimized and launched onto the market in minimum time and cost.

### Background

Given the constant evolution in terms of requirements for new generations of machines and their components, there is a need for manufacturers in the wind sector to continually adapt to the growth of blade groups. It is crucial to facilitate the transition to longer blades that can be transported, maintain a competitive cost and limit investments in production resources as much as possible.

To this end, a methodology is being developed that allows the development and manufacturing process of modular blades to be standardised as much as possible, and which, with a minimum impact on the initial models, largely enables the use of the production lines already available.

There are solutions for blades with interchangeable tips. Thus, patent WO2009135902 describes how to change the blade tip by sizing the blade loads with the longer tip and patent US200702553824 describes how to exchange the tip and then infuse it inside the beam.

On the other hand, there is the design possibility of varying the aerodynamic profile of the blade. RISO and TUF present patents WO01/14740 and EP 2275671, modifying the lift with the variation of the blade profile and presenting an analytical design methodology mapping the blade profile.

The solution presented differs from the state of the art since it is specifically defined for the mass optimization and AEP (annual energy production) of modular blades, which will be essential from now on for logistical reasons. To do this, the chord is reduced, reducing the load and the AEP indirectly. To recover the lost AEP, the length of the blade is extended at its tip. The basis of the invention is to apply these design techniques respecting the geometric restrictions required to optimize the use of the same production means for the entire group of blades and the adaptation of existing moulds to incorporate the minimum changes in the production lines.

### Description

One of the impacts of blade modularization is the increase in loads that can be induced by the excess weight implied by the modular union. Therefore, it is logically advisable to reduce the mass and cost of the union as much as possible without harming the AEP. To this end, the present invention contemplates different actions along the blade. In the area where the joint is made, the section must be as thick as possible to have a reaction arm with which to reduce unit loads for a moment in the given section.

In the tip area, the chord and thickness of the blade are reduced in order to reduce the loads in the joining section. This "thinning" has the disadvantage of a certain loss of AEP. In order to recover the lost AEP, the length of the blade is lengthened at the tip.

It is an object of the invention to reduce the tip chord of the blade, reducing loads and production compared to the nominal blade configuration.

It is another object of the invention to lengthen the outboard module, recovering production without impacting loads so much as to recover what was gained at the previous point.

Another object of the invention is to adapt existing moulds for the manufacture of these new blades.

The advantages are the following:
This concept, which could be adopted in a non-modular blade design, is not as effective as in a modular blade, since lengthening the blade seriously impacts logistics costs, which does not occur in a modular blade since the outboard module (which is the one that is lengthened) does not have a L_{outboard} greater than 30m.

The core of the invention lies in the methodology that allows the ideal combination of these techniques to obtain an optimal modular blade.

### Brief description of the drawings

A brief description will be given below for a series of drawings useful for better understanding the invention and that expressly relate to an embodiment of said invention that is presented as a non-limiting example thereof.
Figure 1 shows a modular blade with the two modules.
Figure 2 shows how the bending loads (dimensioning factor) in the joint section react in unitary elementary loads in the different elements that make up the joint.
Figure 3 shows the distribution of chords and thicknesses of the reference blade (standard version) and the eventual modifications that can be applied to it (slender version).
Figure 4 shows the plan view (chords) and elevation (thicknesses) of the reference blade.
Figure 5 shows the plan view (chords) of the reference blade (standard), the chord reduction modification (slender) and the length extension modification (slender+extension) as well as a detail of the area that includes these modifications.
Figure 6 shows the elevation view (thicknesses) of the reference blade (standard), the chord reduction modification (slender) and the length extension modification (slender+extension) as well as a detail of the area that includes these modifications.
Figure 7 shows the impact on loads and AEP due to the thinning effect as a function of the thinning start position.
Figure 8 shows the impact on loads and AEP for a blade configuration with thinning selected due to the increase in blade length.
Figure 9 shows the mould used and the different outboard module combinations.

### Detailed description

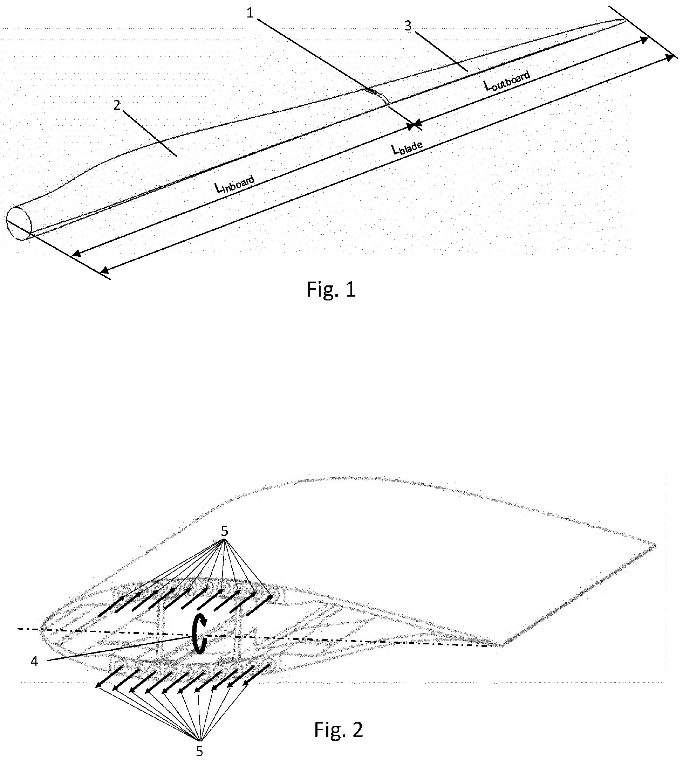

As shown in Figure 1, the modular blade has a connection point (1) and consists of two modules: inboard module (2), between the blade root and the connection with a length L_{inboard}, and outboard module (3), between the connection and the blade tip with a length L_{outboard}. Adding both lengths mentioned above gives the total length of the blade L_{blade}.

As shown in Figure 2, whatever the connection concept, the mass and cost of the same depends on the loads of the section (4) and its geometry. Specifically, the unit loads in the connection elements (5) depend on the load to be supported in said section (4) and its geometry. Thus, a thick blade reacts to the load or moment with a lower unit load due to having a greater reaction arm and a thin blade reacts to the load or moment with a greater unit load due to having a smaller reaction arm. The resulting mass and cost of the joint basically depend on this unit load on the connecting elements (5). Therefore, it will be of vital importance to reduce this unit load on the connecting elements (5) as much as possible.

Since the joint (1) is a metal joint, for a modular blade of L_{blade} = 95m, with a joint 25-30m from the tip, this implies an increase in the load on the blade root of around 8%-10%, which means a redesign of wind turbine components (including the inboard module (2) of the blade).

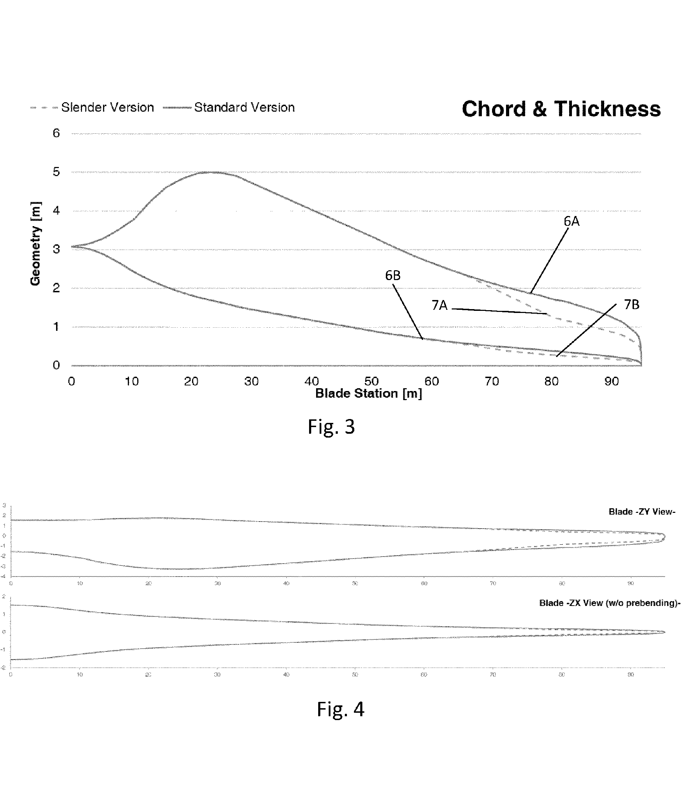

To alleviate this overload, a slender or "slimming" of the outboard module (3) of the blade is generated, reducing the chord/thickness of the geometry, as shown in figure 3 and figure 4.

In this figure 3, it is possible to see a chord distribution (6A) for the standard version and (7A) for the slender version and thicknesses (6B) for the standard version and (7B) for the slender version, for a standard 95m blade and a slender configuration built from said blade, wherein:
a) The chord is reduced to 75% for the last 20m of the tip.
b) A transition of another 15m is defined to adapt to the original chords of the standard blade.
c) The distribution of relative thicknesses is maintained, which leads to an identical reduction to that of chords in the overall thicknesses.

This slender has two effects:
a) Direct reduction of loads at the blade root
b) Direct reduction of loads in the joint area which implies a reduction of the joint and therefore of its impact on loads at the blade root.

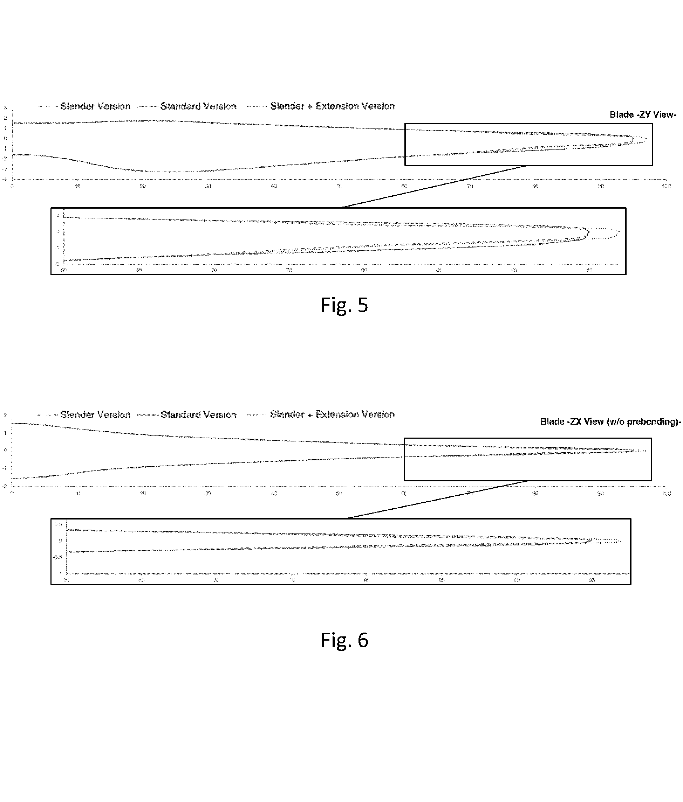

This slender has a disadvantage, which is the loss of power output (AEP) by the machine. This is solved by lengthening the length of the outboard module (3), as shown in the images in figure 5 (chords) and figure 6 (thicknesses), which implies the recovery of production in exchange for losing some improvement in loads.

This method, slender + extension, allows:
a) Absorbing load increases induced by modularization
b) Allowing optimization of the aerodynamic blade design without the restriction of blade length.
c) Having groups of blades for different locations with:
   i. Same inboard module (2)
   ii. Different outboard modules (3) to raise AEP or lower loads depending on the location, with the same manufacturing costs of the inboard module (2), which represents 80% of the blade cost, and with the only investments of outboard modules (3) (which are much lower than those of inboard).
d) No need to redesign components to absorb increased loads, having the possibility of modularizing wind turbine rotors in the closed design phase.
e) No need to redesign joints to achieve larger rotors for the same wind turbine.
Other technologies based on extensions of the root joint, involve an excess weight, and therefore an extra cost, an order of magnitude greater than that proposed by this technology, in addition to making it impossible to overcome an extension limit due to induced overloads.

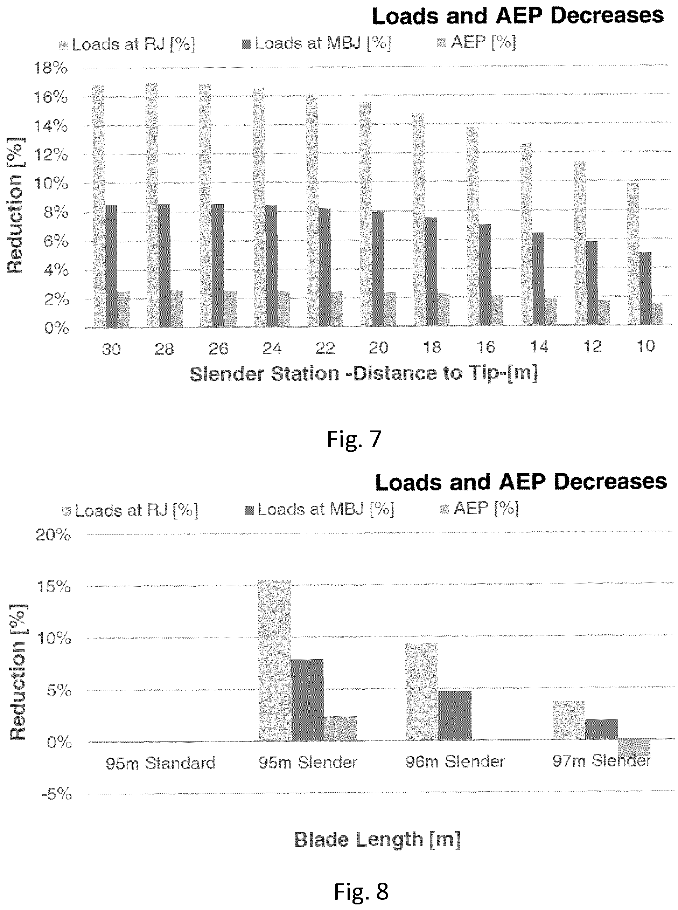

As an example, Figures 7 and 8 include the results of applying this procedure for a blade of L_{blade} = 95m:
STEP 1: Figure 7 includes results of the Root Joint loads (RJ) and joint loads (loads in MBJ Modular Blade Joint elements) based on the selected slender station and for a chord reduction of 75%. Likewise, for each of the configurations the associated reduction in annual energy production (AEP) is included.
STEP 2: A configuration from those presented in Figure 7 is selected, in this case the configuration with constant slender (chord reduction of 75%) from the station located 20m from the tip. This configuration is included in the images in figures 3, 4, 5 and 6. From this configuration, the extension study is carried out, including its results in figure 8. As can be seen in this figure, with an extension of 1m, all the lost AEP is recovered, with a reduction in root loads of 11.5% and 6% in the joint area.

This 6% reduction in the joint area allows the number of joint elements (5) to be reduced from 10 to 8 per cap, reducing the mass from 800kg to 640kg, with its associated reduction in cost. This reduction in elements is greater than the reduction in loads since the eliminated elements are the least efficient and barely increase the joint load step by the 6% that has been reduced.

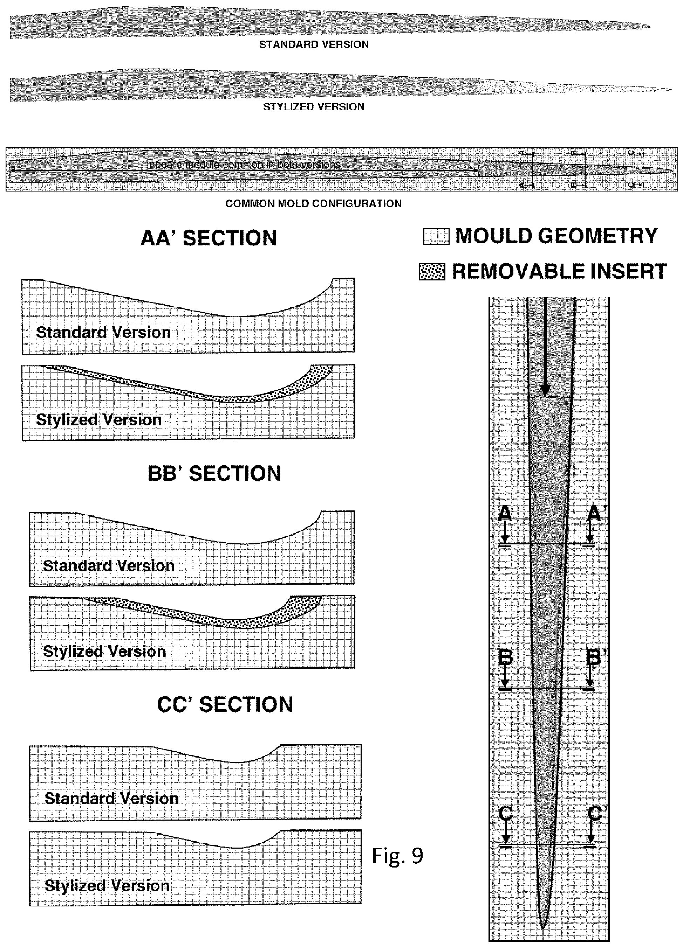

As shown in figure 9, the common mould for the standard blade version and for the slender blade version is longer. The outboard mould has inserts to make the standard modular blade and the slender modular blade.

The mould has to be the envelope of the two types of blades: the standard and the slender. The same mould is used for both types of blades. The mould for the standard blade does not vary except for the last two metres, which have more string. That is why in the CC' section the removable insert is in the standard version.

The slender version is longer and thinner, the removable inserts are placed in the AA' and BB' sections.

## Claims

1. Method for obtaining an improved segmented blade, based on the blade geometry / blade length L_{blade}, the position of the joint (1), and the number of elements (5) used in the joint, which is **characterized in that** the following steps are followed:
a) reducing the chord and overall thickness by 75% in the outbound module (3),
b) extending the span of the outboard module (3) to recover AEP by 3.5%,
c) reducing by 6% in the number of joining elements (5) and consequently of their weight, due to the effect of the reduction of loads without impacting the performance of the wind turbine.

2. Method for obtaining an improved segmented blade according to claim 1, wherein in addition to the reduction of the chord and overall thickness, as well as the extension of the span of the outboard module (3) and the reduction of the number of joining elements, a common mould with removable inserts arranged in different sections of the outboard module (3) is used.

3. Method for obtaining an improved segmented blade according to claim 1, wherein for a blade of 95m length, with the joint at a distance of 25-30m from the blade tip, the reduction of the chord and overall thickness of 75% is carried out in the 20m of the outboard module (3).

4. Method for obtaining an improved segmented blade according to claim 1, wherein for a blade of 95m length the outboard module (3) extends 1m.

5. Method for obtaining an improved segmented blade according to claim 1, wherein for a blade of 95m length the joining elements (5) are reduced from 10 to 8 and the mass of the blade from 800kg to 640kg, reducing the impact of the mass of the joint on the rest of the wind turbine.

6. Method for obtaining an improved segmented blade according to claim 1, wherein for a blade of 95 m length the loads on the blade root are reduced by 11% without impacting the performance of the wind turbine.

7. Method for obtaining an improved segmented blade according to claim 2, wherein the standard blade and the slender blade are manufactured with the same mould, adding removable inserts in the outboard module (3), in the AA' and BB' section for the slender blade and in the CC' section for the standard blade.
